# EUROPEAN PATENT APPLICATION

(11) **EP 4 556 217 A1**
(43) Date of publication of application: **21.05.2025**
(21) Application number: 23862748.3
(22) Date of filing: 20.06.2023
(51) Int. Cl.: B32B 15/09, B65D 25/36

(54) **RESIN-COATED METAL PLATE FOR CONTAINER, AND METHOD FOR MANUFACTURING SAME**

(30) Priority: 09.09.2022 JP 2022143518
(71) Applicant: JFE Steel Corporation, Tokyo 100-0011 (JP)
(72) Inventor: KAWAI Yuya, Tokyo 100-0011 (JP); KITAGAWA Junichi, Tokyo 100-0011 (JP); OSHIMA Yasuhide, Tokyo 100-0011 (JP)
(74) Representative: Haseltine Lake Kempner LLP
(86) International application number: PCT/JP2023/022725
(87) International publication number: WO 2024/053203

(57) **Abstract**

Resin-coated metal sheets for containers are provided that are capable of undergoing can manufacturing with no breakage of a resin coating layer and with no or minor abrasion of a resin coating layer stemming from insufficient slidability during can manufacturing, and also excel in adhesion with a printing paint applied after the can manufacturing.

A resin-coated metal sheet 1 for containers includes a polyester resin coating layer 3 on at least one side of a metal sheet 2. The polyester resin coating layer 3 is such that: the half-width of a peak assigned to C=O stretching vibration near 1730 cm⁻¹ according to laser Raman spectroscopy is 24 cm⁻¹ or more and 28 cm⁻¹ or less as measured in such a manner that linearly polarized laser light with a wavelength of 532 nm is incident on the surface thereof in such a manner that the polarization plane is parallel to the rolling direction of the metal sheet; the polyester resin coating layer contains 0.010 mass% or more and 1.0 mass% or less of an organic lubricant; and the surface of the polyester resin coating layer, after being heat-treated in such a manner that the temperature is increased from room temperature to 240°C in 2 minutes, has a contact angle with diiodomethane of 23° or more and 40° or less.

## Description

### Technical Field

The present invention relates to resin-coated metal sheets for containers that have a polyester resin coating layer on at least one side of a metal sheet.

### Background Art

In general, metal containers are broadly divided into two-piece cans and three-piece cans. Two-piece cans are metal containers that are composed of two parts: a seamless bottomed can body and a lid piece. On the other hand, three-piece cans are metal containers composed of three parts: a can body, a top lid, and a bottom lid. Two-piece cans have a beautiful appearance because their bodies are free from welds. However, the manufacturing of two-piece cans generally involves a high formability.

Metal sheets used as materials for metal containers, such as tin-free steel (TFS) and aluminum, are conventionally covered with a coating in order to enhance corrosion resistance. However, this coating process has drawbacks in that the coating and baking steps are complicated and take a large amount of processing time, and that the process releases large amounts of solvents and carbon dioxide and is environmentally unfriendly. To solve these problems, resin-coated metal sheets for containers that have a thermoplastic film on the metal surface have been developed and are currently widely used in industry mainly as materials for beverage cans.

Patent Literatures 1 to 3 disclose techniques that manufacture a two-piece can by drawing or DI (draw & ironing) of a resin-coated metal sheet having resin coating layers on both sides of a metal sheet. Furthermore, Patent Literatures 4 and 5 disclose techniques that enable a processing for enhancing the design of a can body, such as printing, by adding white pigments to a resin coating layer that will be placed on the outer side of a metal container after can manufacturing.

The recent diversification in the shapes of can bodies has necessarily led to a higher formability in can body manufacturing. Reducing the can diameter and increasing the can height allow more cans to be stored per unit area. On the other hand, increasing the formability is accompanied by a risk that a resin coating layer that will be present on the outer side of a can body will be broken or abraded during the manufacturing of a container from the resin-coated metal sheet, the processing being no longer possible. Patent Literature 6 suggests a technique in which a lubricant component is added to a resin coating layer to suppress the abrasion of the resin coating layer during the manufacturing of two-piece cans with a high formability.

### Citation List

### Patent Literature

PTL 1: Japanese Unexamined Patent Application Publication No. 2-303634
PTL 2: Japanese Unexamined Patent Application Publication No. 4-91825
PTL 3: Japanese Unexamined Patent Application Publication No. 2004-148324
PTL 4: Japanese Unexamined Patent Application Publication No. 8-169098
PTL 5: Japanese Unexamined Patent Application Publication No. 2004-130536
PTL 6: Japanese Unexamined Patent Application Publication No. 2017-30210

### Summary of Invention

### Technical Problem

As described above, a resin coating layer should be enhanced in surface slidability by way of, for example, the addition of a lubricant component to the resin coating layer in order to reduce or eliminate the abrasion of the resin coating layer during the manufacturing of two-piece cans with a high formability.

On the other hand, a lubricant component inhibits the adhesion of a printing paint applied in a printing process and may disenable the printing paint to adhere. To prevent this, it is necessary to avoid excessive bleed-out (a phenomenon in which an additive in a polymer comes out to the surface) of the lubricant component to the surface of the resin coating layer. When a lubricant component has excessively bled out to the surface of a resin coating layer, the lubricant component sitting on the surface of the resin coating layer repels a printing paint and lowers the adhesion of the printing paint.

Furthermore, the flexibility of a resin coating layer is also required to ensure that the resin coating layer can follow deformation in can manufacturing with a high formability and consequently can resist breakage.

In view of the characteristics discussed above, the conventional techniques are incapable of offering a resin-coated metal sheet for containers that suffers no or minor breakage and abrasion of a resin coating layer in the process of can manufacturing with a high formability and also can be painted with enhanced adhesion at the same time.

The present invention has been made in view of the problems discussed above. It is therefore an object of the present invention to provide resin-coated metal sheets for containers that are capable of undergoing can manufacturing with no or minor breakage and abrasion of a resin coating layer, and also excel in adhesion with a printing paint applied after the can manufacturing.

### Solution to Problem

The present inventors carried out extensive studies directed to solving the above problems. As a result, the present inventors have obtained the following findings.

A resin coating layer should have surface flexibility in order to resist breakage during can manufacturing with a high formability. The present inventors have found that the surface of a resin coating layer needs to be of low degree of crystallinity in order for the resin coating layer to ensure surface flexibility. As an index of the degree of crystallinity of the surface of a resin coating layer, the present inventors have focused on the half-width of a peak assigned to C=O stretching vibration near 1730 cm⁻¹ according to laser Raman spectroscopy. Controlling this value to a specific range can eliminate or reduce the occurrence of breakage of a resin coating layer during can manufacturing.

Furthermore, slidability should be enhanced in order to eliminate or reduce the abrasion of a resin coating layer during can manufacturing. Enhancing slidability requires the addition of an organic lubricant. On the other hand, as described earlier, a lubricant component inhibits the adhesion with a printing paint and may disenable the printing paint to adhere. Thus, it is necessary to suppress excessive bleed-out of a lubricant component to the surface of a resin coating layer. The present inventors have found that an organic lubricant bleeds out to the surface of a resin coating layer in a promoted manner when the surface of the resin coating layer has a high degree of crystallinity. That is, according to the present invention, it has been found that the flexibility of a resin coating layer can be ensured and excessive bleed-out of an organic lubricant to the surface of a resin coating layer can be suppressed at the same time by lowering the degree of crystallinity of the surface of the resin coating layer.

Furthermore, the present inventors have found that the control of the affinity for non-polar liquids is critical for the adhesion of the surface of a resin coating layer with respect to a printing paint. A resin coating layer and a printing paint are tightly bonded to each other by the van der Waals force. The adhesion with a printing paint can be enhanced by increasing the van der Waals force component in the surface tension of the resin coating layer. The van der Waals force component in the surface tension can be evaluated based on the contact angle with a non-polar liquid. The contact angle with a non-polar liquid decreases with increasing van der Waals force component in the surface tension. The present inventors have found that a resin-coated metal sheet for containers having excellent adhesion with a printing paint can be obtained by designing a resin coating layer so that the resin coating layer, after being heat-treated in such a manner that the temperature is increased from room temperature to 240°C in 2 minutes, has a specific contact angle with diiodomethane.

The present invention has been made based on the above findings. A gist of the present invention is as follows.
[1] A resin-coated metal sheet for containers including a polyester resin coating layer on at least one side of a metal sheet, wherein
   the polyester resin coating layer is such that:
   the half-width of a peak assigned to C=O stretching vibration near 1730 cm⁻¹ according to laser Raman spectroscopy is 24 cm⁻¹ or more and 28 cm⁻¹ or less as measured in such a manner that linearly polarized laser light with a wavelength of 532 nm is incident on the surface of the polyester resin coating layer in such a manner that the polarization plane is parallel to a rolling direction of the metal sheet,
   the polyester resin coating layer contains 0.010 mass% or more and 1.0 mass% or less of an organic lubricant, and
   the surface of the polyester resin coating layer, after being heat-treated in such a manner that the temperature is increased from room temperature to 240°C in 2 minutes, has a contact angle with diiodomethane of 23° or more and 40° or less.
[2] The resin-coated metal sheet for containers according to [1], wherein the polyester resin coating layer contains 30 mass% or less of titanium oxide.
[3] A resin-coated metal sheet for containers including a polyester resin coating layer on at least one side of a metal sheet, wherein
   the polyester resin coating layer is such that:
   the polyester resin coating layer has a structure having at least three layers including an outermost layer, an intermediate layer, and a lowermost layer,
   the half-width of a peak assigned to C=O stretching vibration near 1730 cm⁻¹ according to laser Raman spectroscopy is 24 cm⁻¹ or more and 28 cm⁻¹ or less as measured in such a manner that linearly polarized laser light with a wavelength of 532 nm is incident on the surface of the outermost layer in such a manner that the polarization plane is parallel to a rolling direction of the metal sheet,
   the surface of the outermost layer, after being heat-treated in such a manner that the temperature is increased from room temperature to 240°C in 2 minutes, has a contact angle with diiodomethane of 23° or more and 40° or less,
   the outermost layer contains 0.010 mass% or more and 1.0 mass% or less of an organic lubricant,
   the outermost layer and the lowermost layer each contain 0 mass% or more and 2.0 mass% or less of titanium oxide, and the intermediate layer contains 10 mass% or more and 30 mass% or less of titanium oxide, and
   the outermost layer and the lowermost layer each have a thickness of 1.0 µm or more and 5.0 µm or less, and the intermediate layer has a thickness of 6.0 µm or more and 30 µm or less.
[4] The resin-coated metal sheet for containers according to any one of [1] to [3], wherein the polyester resin coating layer is made of a resin material containing 90 mol% or more of ethylene terephthalate units.
[5] The resin-coated metal sheet for containers according to any one of [1] to [4], wherein the organic lubricant includes an acid-modified polyolefin or an oxidized polyolefin each having an acid value of 1.0 mgKOH/g or more and 100 mgKOH/g or less.
[6] A method for manufacturing a resin-coated metal sheet for containers described in [1] or [2], the method including:
   press-bonding a polyester resin coating layer containing 0.010 mass% or more and 1.0 mass% or less of an organic lubricant to a metal sheet, and subsequently holding the surface of the polyester resin coating layer at a temperature equal to or higher than a melting start temperature of the polyester resin coating layer for 0.50 seconds or more, and cooling the surface at a cooling rate of 150°C/sec or more.
[7] The method for manufacturing a resin-coated metal sheet for containers according to [6], wherein the polyester resin coating layer contains 30 mass% or less of titanium oxide.
[8] A method for manufacturing a resin-coated metal sheet for containers described in [3], the method including: press-bonding a polyester resin coating layer to a metal sheet, wherein the polyester resin coating layer has a structure having at least three layers including an outermost layer, an intermediate layer, and a lowermost layer; the outermost layer contains 0.010 mass% or more and 1.0 mass% or less of an organic lubricant; the outermost layer and the lowermost layer each contain 0 mass% or more and 2.0 mass% or less of titanium oxide; and the intermediate layer contains 10 mass% or more and 30 mass% or less of titanium oxide, and subsequently
   holding the surface of the outermost layer at a temperature equal to or higher than a melting start temperature of the outermost layer for 0.50 seconds or more, and cooling the surface at a cooling rate of 150°C/sec or more.
[9] The method for manufacturing a resin-coated metal sheet for containers according to any one of [6] to [8], wherein the polyester resin coating layer is made of a resin material containing 90 mol% or more of ethylene terephthalate units.
[10] The method for manufacturing a resin-coated metal sheet for containers according to any one of [6] to [9], wherein the organic lubricant includes an acid-modified polyolefin or an oxidized polyolefin each having an acid value of 1.0 mgKOH/g or more and 100 mgKOH/g or less.

### Advantageous Effects of Invention

The resin-coated metal sheets for containers according to the present invention are capable of undergoing can manufacturing with no or minor breakage and abrasion of the resin coating layer, and also excel in adhesion with a printing paint applied after the can manufacturing.

### Brief Description of Drawings

[Fig. 1] Fig. 1 is a sectional view illustrating a configuration of a resin-coated metal sheet for containers according to an embodiment of the present invention.
[Fig. 2] Fig. 2 is a sectional view illustrating a configuration of a resin-coated metal sheet for containers according to another embodiment of the present invention. Description of Embodiments

Hereinafter, a resin-coated metal sheet for containers according to an embodiment of the present invention will be described.

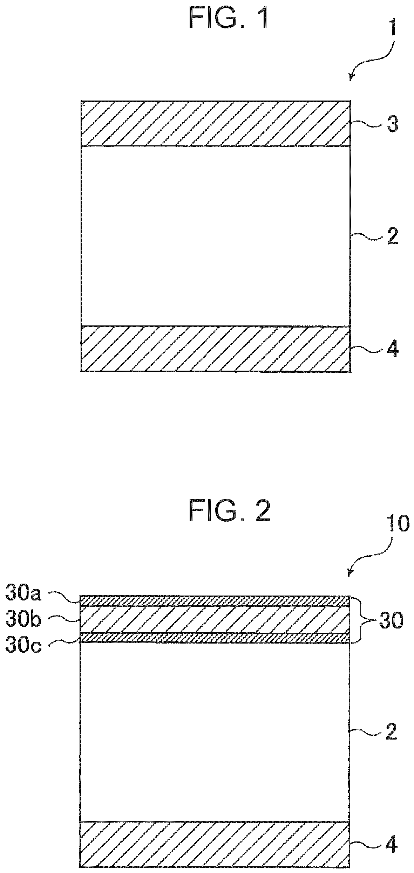

Fig. 1 is a sectional view illustrating a configuration of a resin-coated metal sheet for containers according to an embodiment of the present invention. As illustrated in Fig. 1, the resin-coated metal sheet 1 for containers according to an embodiment of the present invention includes a metal sheet 2, a polyester resin coating layer 3 (hereinafter, also written simply as the resin coating layer 3) disposed on the top side of the metal sheet 2, and a resin coating layer 4 disposed on the bottom side of the metal sheet 2. The resin coating layers 3 and 4 define the outer side and the inner side, respectively, of a metal container after can manufacturing.

In the present embodiment, the metal sheet 2 is a steel sheet, such as a tin steel sheet or a tin-free steel sheet. When a tin steel sheet is used, the amount of plating is desirably 0.5 g/m² or more and 15 g/m² or less. A tin-free steel sheet desirably has, on the surface, a metallic chromium layer with a coating weight of 50 mg/m² or more and 200 g/m² or less, and a chromium oxide layer with a coating weight in terms of metallic chromium of 3 mg/m² or more and 30 g/m² or less. The type of steel sheet is not particularly limited as long as the steel sheet can be formed into a desired shape. Those obtained by treating the following compositions by the following methods are desirable.
(1) Low carbon steel having a C (carbon) content approximately more than 0.003 mass% and 0.10 mass% or less is recrystallization annealed by continuous annealing.
(2) Low carbon steel having a C content of approximately more than 0.003 mass% and 0.10 mass% or less is recrystallization annealed by continuous annealing and is overaged.
(3) Low carbon steel having a C content of approximately more than 0.003 mass% and 0.10 mass% or less is recrystallization annealed by box annealing.
(4) Low carbon steel having a C content of approximately more than 0.003 mass% and 0.10 mass% or less is recrystallization annealed by continuous annealing or box annealing and is subjected to secondary cold rolling (double reduced (DR) rolling).
(5) Elements that fix dissolved carbon, such as Nb and Ti, are added to ultralow carbon steel having a C content of approximately 0.003 mass% or less, and the resultant IF (interstitial free) steel is recrystallization annealed by continuous annealing.

Mechanical characteristics of the steel sheet are not particularly limited as long as the steel sheet can be formed into a desired shape. In order to ensure sufficient strength of can bodies without impairing formability, it is desirable to use a steel sheet having a yield point (YP) of 220 MPa or more and 580 MPa or less. Furthermore, the Lankford value (the r value), which is an indicator of plastic anisotropy, is desirably 0.8 or more. The planar anisotropy Δr of the r value is desirably 0.7 or less in absolute value.

The components of the steel that enable achieving the above characteristics are not particularly limited. For example, the steel sheet may contain such components as Si, Mn, P, S, Al, and N. Preferably, the Si content is 0.001 mass% or more and 0.1 mass% or less, the Mn content is 0.01 mass% or more and 0.6 mass% or less, the P content is 0.002 mass% or more and 0.05 mass% or less, the S content is 0.002 mass% or more and 0.05 mass% or less, the Al content is 0.005 mass% or more and 0.100 mass% or less, and the N content is 0.0005 mass% or more and 0.020 mass% or less. The balance may be Fe and incidental impurities. While the steel may contain other components, such as Ti, Nb, B, Cu, Ni, Cr, Mo, and V, the total content of these components is desirably 0.02 mass% or less in order to ensure, for example, corrosion resistance.

In the present invention, at least the polyester resin coating layer 3 on one side (the resin coating layer that will define the outer side of a container as a result of forming) is such that the half-width of a peak assigned to C=O stretching vibration near 1730 cm⁻¹ according to laser Raman spectroscopy is 24 cm⁻¹ or more and 28 cm⁻¹ or less as measured in such a manner that linearly polarized laser light with a wavelength of 532 nm is incident on the surface in such a manner that the polarization plane is parallel to the rolling direction of the metal sheet (the steel sheet).

It is known that the half-width of a peak based on C=O stretching vibration with a Raman shift near 1730 cm⁻¹ according to laser Raman spectroscopy is correlated with the density of the polyester resin (J. Polymer Science 10. 317. 1972.). Furthermore, it is known that there is a correlation between the density of a resin and the volume fraction crystallinity (Koubunshi no Kotai Kouzou (Polymer Solid Structures) II (KYORITSU SHUPPAN CO., LTD., 1984)). Therefore, measuring the half-width of a peak based on C=O stretching vibration near 1730 cm⁻¹ can give a degree of crystallinity of the polyester via the density of the polyester. Thus, the present invention uses the half-width of a peak based on C=O stretching vibration near 1730 cm⁻¹ according to laser Raman spectroscopy, as an index of the degree of crystallinity of the surface of the resin coating layer.

When the half-width of a peak assigned to C=O stretching vibration near 1730 cm⁻¹ (hereinafter, also written simply as the half-width of the peak) is 24 cm⁻¹ or more and 28 cm⁻¹ or less, the surface of the resin coating layer 3 has a low degree of crystallinity and the resin coating layer is highly flexible. When the half-width of the peak is less than 24 cm⁻¹, the organic lubricant will bleed out to deteriorate the adhesion with a printing paint. When, in particular, the half-width of the peak is less than 22 cm⁻¹, the surface flexibility of the resin coating layer 3 is so poor that the resin coating layer 3 is incapable of following deformation during can manufacturing and the resin coating layer 3 is broken.

The lowness in the degree of crystallinity of the surface of the resin coating layer 3 is very important from the point of view of suppressing excessive bleed-out of the organic lubricant to the surface of the resin coating layer 3. When the resin coating layer 3 has an increased degree of crystallinity, the organic lubricant present in the resin coating layer 3 bleeds out in a facilitated manner to make it impossible to control the contact angle with diiodomethane, which will be described later, to the range specified in the present invention, thus causing a decrease in the adhesion with a printing paint. From the point of view of the adhesion with a printing paint, the half-width of a peak assigned to C=O stretching vibration with a Raman shift near 1730 cm⁻¹ needs to be 24 cm⁻¹ or more and 28 cm⁻¹ or less. The half-width of the peak is more preferably 25 cm⁻¹ or more and 28 cm⁻¹ or less. When the degree of crystallinity is zero, the half-width of a peak assigned to C=O stretching vibration near 1730 cm⁻¹ is 28 cm⁻¹. Thus, the upper limit of the half-width in the present invention is 28 cm⁻¹. Specifically, the half-width of the peak may be measured by the method described in Examples.

The resin-coated metal sheet 1 for containers is produced by press-bonding the resin coating layers 3 and 4 to the top and bottom surfaces, respectively, of the metal sheet 2 that has been heated to or above the melting point of the resin coating layers 3 and 4 using laminating rolls, and subsequently cooling the unit. The degree of crystallinity of the surface of the resin coating layer 3 may be controlled by changing the surface temperature of the resin coating layer 3 after press-bonding, and the time for which the surface temperature of the resin coating layer 3 after press-bonding is held at a temperature equal to or higher than the melting start temperature of the resin coating layer 3.

In order to control the degree of crystallinity of the surface of the resin coating layer 3 to the range specified in the present invention, it is necessary that after the resin coating layer 3 is press-bonded to the metal sheet 2, the surface of the resin coating layer 3 be held at a temperature equal to or higher than the melting start temperature of the resin coating layer 3 for 0.50 seconds or more and be thereafter quenched. When the time for which, after the resin coating layer 3 is press-bonded to the metal sheet 2, the surface of the resin coating layer 3 is held at a temperature equal to or higher than the melting start temperature of the resin coating layer 3 is less than 0.50 seconds, the surface of the resin coating layer 3 is not sufficiently melted and cannot obtain the degree of crystallinity defined in the present invention. When, on the other hand, the time for which, after the resin coating layer 3 is press-bonded to the metal sheet 2, the surface of the resin coating layer 3 is held at a temperature equal to or higher than the melting start temperature of the resin coating layer 3 is more than 3.0 seconds, the production line is extended and the productivity is significantly lowered. Thus, the time for which, after the resin coating layer 3 is press-bonded to the metal sheet 2, the surface of the resin coating layer 3 is held at a temperature equal to or higher than the melting start temperature of the resin coating layer 3 is preferably 3.0 seconds or less.

Incidentally, the term quenching means that the surface of the resin coating layer 3 is cooled from the melting start temperature of the resin coating layer 3 to 120°C at a cooling rate of 150°C/sec or more. Preferably, the cooling rate is 200°C/sec or more. When the surface of the resin coating layer 3 is brought to below the melting start temperature by, for example, natural cooling after holding at a temperature equal to or higher than the melting start temperature of the resin coating layer **3,** crystallization proceeds in the surface of the resin coating layer 3 and the degree of crystallinity defined in the present invention cannot be obtained.

The resin coating layer 3 that has been press-bonded to the metal sheet 2 needs to be away from contact with a roll or the like until the resin coating layer 3 is quenched. Contact with a roll or the like whose temperature is lower than the melting start temperature of the resin coating layer 3 cools the surface of the resin coating layer 3 to below the melting start temperature of the resin coating layer 3, and the degree of crystallinity of the surface of the resin coating layer 3 cannot be controlled to the range specified in the present invention. Furthermore, contact with a roll or the like whose temperature is equal to or higher than the melting point of the resin coating layer 3 causes the melt to stick to the roll. For the reasons above, the resin coating layer 3 that has been press-bonded to the metal sheet 2 is kept away from contact with a roll or the like until the resin coating layer 3 is quenched.

A high surface temperature of the resin coating layer 3 may be obtained after the resin coating layer 3 is press-bonded to the metal sheet 2, by increasing the heating temperature for the metal sheet 2 before the press-bonding, reducing the pressure of the laminating roll at the time of press-bonding, or increasing the temperature of the laminating roll at the time of press-bonding. In order to obtain the target degree of crystallinity in the present invention, it is preferable to heat the metal sheet 2 at a temperature that is approximately 20°C to 50°C higher than the melting point of the resin coating layer 3. Furthermore, lowering the roll pressure at the time of press-bonding weakens the cooling effect of the roll during the press-bonding and allows the resin coating layer 3 to maintain a high surface temperature after the press-bonding. Furthermore, a laminating roll having a higher temperature is less effective in cooling during the press-bonding and the resin coating layer 3 can maintain a high surface temperature after the press-bonding. When, however, the temperature of the laminating roll is higher than the glass transition point of the resin coating layer 3 by more than 60°C, the resin coating layer 3 is softened and suffers appearance defects due to transferring of roughness of the laminating roll. Thus, the temperature of the laminating roll needs to be 60°C or less above the glass transition point of the resin coating layer 3.

In order to improve slidability during the manufacturing of cans, the resin coating layer 3 contains an organic lubricant in the range of 0.010 mass% or more and 1.0 mass% or less. When the content of the organic lubricant is less than 0.010 mass%, sufficient slidability cannot be ensured during can manufacturing and the resin coating layer 3 will be abraded. When the content of the organic lubricant is more than 1.0 mass%, the organic lubricant represents so large a proportion in the resin coating layer 3 and the resin coating layer 3 is embrittled and is abraded during can manufacturing. The content of the organic lubricant is preferably 0.020 mass% or more. Furthermore, the content of the organic lubricant is preferably 0.90 mass% or less, and more preferably 0.80 mass% or less.

The organic lubricant contained in the resin coating layer 3 desirably includes an acid-modified polyolefin with an acid value of 1.0 mgKOH/g or more and 100 mgKOH/g or less or an oxidized polyolefin with an acid value of 1.0 mgKOH/g or more and 100 mgKOH/g or less. The choice of the acid value of the organic lubricant allows for control of the behavior of the organic lubricant in bleeding out to the surface of the resin coating layer 3. With decreasing acid value, the organic lubricant bleeds out more easily to the surface of the resin coating layer 3 during heat treatment. With increasing acid value, the organic lubricant is less prone to bleed out to the surface of the resin coating layer 3 during heat treatment. When the organic lubricant contained in the resin coating layer 3 has an acid value of 1.0 mgKOH/g or more, excessive bleed-out to the surface of the resin coating layer 3 due to heat treatment can be suppressed more effectively. When the acid value of the organic lubricant contained in the resin coating layer 3 is 100 mgKOH/g or less, the organic lubricant bleeds out to the surface of the resin coating layer 3 in a more appropriate amount and can more effectively prevent abrasion during the manufacturing of cans. The acid value of the organic lubricant is more preferably 2.0 mgKOH/g or more, and even more preferably 10 mgKOH/g or more. The acid value of the organic lubricant is more preferably 80 mgKOH/g or less, and even more preferably 60 mgKOH/g or less. The acid value of the organic lubricant may be measured in accordance with JIS K5902.

Furthermore, the melting point of the organic lubricant is desirably 80°C or above and 230°C or below. When the melting point of the organic lubricant is 80°C or above, bleed-out of the organic lubricant to the surface of the resin coating layer 3 can be suppressed more effectively. When, on the other hand, the melting point of the organic lubricant is 230°C or below, better slidability can be obtained at the time of forming. The melting point of the organic lubricant is more preferably 90°C or above, and even more preferably 100°C or above. The melting point of the organic lubricant is more preferably 200°C or below, and even more preferably 180°C or below.

In the present invention, the resin coating layer 3 is such that the surface of the resin coating layer 3, after being heat-treated in such a manner that the temperature is increased from room temperature (ambient temperature) to 240°C in 2 minutes, has a contact angle with diiodomethane of 23° or more and 40° or less. Here, the heat treatment that increases the temperature from room temperature to 240°C in 2 minutes means a heat treatment in which the temperature of the resin-coated metal sheet 1 for containers is increased to 240°C (reaches 240°C) in 2 minutes from the start of the heat treatment (from room temperature). Incidentally, room temperature is not particularly limited and is, for example, 20°C ± 15°C. This heat treatment simulates the heat treatment performed on can bodies being produced on a can manufacturing line to enhance the adhesion between a resin coating layer and a metal sheet. The contact angle with diiodomethane is correlated with the van der Waals force component in the surface tension of the resin coating layer 3. The larger the contact angle with diiodomethane, the smaller the van der Waals force component in the surface tension of the resin coating layer 3. When the contact angle with diiodomethane is more than 40°, the bonding force between the resin coating layer and a printing paint stemming from the van der Waals force is low and the printing paint will come off. When the contact angle with diiodomethane is less than 23°, there is little organic lubricant on the surface of the resin coating layer 3 and it is impossible to avoid abrasion during can manufacturing. Thus, the contact angle with diiodomethane on the surface of the resin coating layer 3 after the heat treatment needs to be 23° or more and 40° or less. The contact angle is preferably 25° or more, and more preferably 27° or more. The contact angle is preferably 38° or less, more preferably 36° or less, and even more preferably 29° or less. Specifically, the contact angle with diiodomethane may be measured by the method described in Examples. In the present invention, the desired contact angle with diiodomethane can be obtained by controlling the half-width of the peak (the degree of crystallinity) and the organic lubricant content. When the resin coating layer 3 contains no organic lubricant, the contact angle with diiodomethane on the surface of the resin coating layer 3 is small even with the control of the degree of crystallinity due to the absence of the organic lubricant on the surface of the resin coating layer **3,** and the resin coating layer 3 is abraded.

The resin coating layer 3 is desirably formed of a resin material containing 90 mol% or more of ethylene terephthalate units. Specifically, the resin coating layer 3 is desirably made of a polyester that contains 90 mol% or more of ethylene terephthalate units constituting polyethylene terephthalate consisting of terephthalic acid as the carboxylic acid component and ethylene glycol as the glycol component. More preferably, the resin coating layer 3 is formed of a resin material containing 92 mol% or more of ethylene terephthalate units. More preferably, the resin coating layer 3 is formed of a resin material containing 92 mol% or more and 97 mol% or less of ethylene terephthalate units. The resin coating layer 3 containing 90 mol% or more of ethylene terephthalate units can withstand higher heat generated during continuous can manufacturing.

Various dicarboxylic acid components and glycol components may be used as raw materials for the polyester resins. As long as heat resistance and formability are not impaired, a plurality of dicarboxylic acid components and/or a plurality of glycol components may be copolymerized. Examples of the dicarboxylic acid components include aromatic dicarboxylic acids, such as terephthalic acid, isophthalic acid, naphthalenedicarboxylic acid, diphenyldicarboxylic acid, diphenylsulfonedicarboxylic acid, diphenoxyethanedicarboxylic acid, 5-sodiumsulfoisophthalic acid, and phthalic acid; aliphatic dicarboxylic acids, such as oxalic acid, succinic acid, adipic acid, sebacic acid, dimer acid, maleic acid, and fumaric acid; alicyclic dicarboxylic acids, such as cyclohexanedicarboxylic acid; and oxycarboxylic acids, such as p-oxybenzoic acid. Examples of the glycol components include aliphatic glycols, such as ethylene glycol, propanediol, butanediol, pentanediol, hexanediol, and neopentyl glycol; alicyclic glycols, such as cyclohexanedimethanol; aromatic glycols, such as bisphenol A and bisphenol S; and diethylene glycol.

The resin material for forming the resin coating layer 3 may be produced by any method without limitation. For example, the resin material may be formed by a method in which terephthalic acid, ethylene glycol, and a comonomer component are esterified, and the resultant reaction product is polycondensed into a copolyester. Alternatively, the resin material may be formed by a method in which dimethyl terephthalate, ethylene glycol, and a comonomer component are transesterified, and the resultant reaction product is polycondensed into a copolyester. Where necessary, the polyester production may involve additives, such as fluorescent brighteners, antioxidants, heat stabilizers, UV absorbers, and antistatic agents.

The resin coating layer 3 is sometimes required to be white in order to enhance design after printing. In this case, 30 mass% or less of titanium oxide may be added as an optional component to the resin coating layer 3. The content of titanium oxide is preferably 10 mass% or more, and more preferably 12 mass% or more. The content of titanium oxide is more preferably 25 mass% or less, and even more preferably 20 mass% or less. When the content of titanium oxide is 10 mass% or more, higher whiteness can be obtained after forming. When the content of titanium oxide is 30 mass% or less, the resin-coated metal sheet can exhibit better adhesion between the metal sheet 2 and the resin coating layer 3 and higher formability of the resin coating layer 3 even when formed with a high formability.

The titanium oxide to be added to the resin coating layer 3 is not particularly limited. One having a purity of rutile titanium oxide of 90% or more is preferable because it exhibits higher dispersibility when mixed with the resin material.

Examples of the resin materials for forming the resin coating layer 4 (the resin coating layer that will define the inner side of a container as a result of forming) are the same as the resin materials for forming the resin coating layer 3 described hereinabove. In particular, a polyester is preferable that contains 90 mol% or more of ethylene terephthalate units constituting polyethylene terephthalate consisting of terephthalic acid as the carboxylic acid component and ethylene glycol as the glycol component. The configuration of the resin coating layer 4 may be the same as or different from that of the resin coating layer 3.

For example, the resin-coated metal sheet for containers of the present embodiment may be preferably manufactured by a method that includes press-bonding a polyester resin coating layer (a resin material for forming a polyester resin coating layer) to a metal sheet, subsequently holding the surface of the polyester resin coating layer at a temperature equal to or higher than the melting start temperature of the polyester resin coating layer for 0.50 seconds or more, and cooling the surface at a cooling rate of 150°C/sec or more. The polyester resin coating layer contains 0.010 mass% or more and 1.0 mass% or less of an organic lubricant. The polyester resin coating layer is preferably made of a resin material containing 90 mol% or more of ethylene terephthalate units. The organic lubricant preferably includes an acid-modified polyolefin or an oxidized polyolefin each having an acid value of 1.0 mgKOH/g or more and 100 mgKOH/g or less.

Next, a resin-coated metal sheet for containers according to another embodiment of the present invention will be described. The resin-coated metal sheet for containers of the present embodiment includes a polyester resin coating layer on at least one side of a metal sheet, and the polyester resin coating layer has at least three layers including an outermost layer, an intermediate layer, and a lowermost layer.

Fig. 2 is a sectional view illustrating a configuration of a resin-coated metal sheet 10 for containers representing an example of the present embodiment. In the present embodiment, the same reference numerals will be used for features corresponding to those of the resin-coated metal sheet 1 for containers, and the detailed description of such features will be omitted.

The resin-coated metal sheet 10 for containers illustrated in Fig. 2 differs from the resin-coated metal sheet 1 for containers in that a polyester resin coating layer 30 (hereinafter, also written simply as the resin coating layer 30) disposed on the top side of the metal sheet 2 is composed of a plurality of polyester resin coating layers (an outermost layer 30a, an intermediate layer 30b, and a lowermost layer 30c).

In the resin-coated metal sheet 10 for containers, the configurations of the metal sheet 2 and the resin coating layer 4 are the same as those of the metal sheet 2 and the resin coating layer 4, respectively, in the resin-coated metal sheet 1 for containers described hereinabove.

In the resin-coated metal sheet 10 for containers, at least the resin coating layer 30 on one side (the resin coating layer that will define the outer side of a container as a result of forming) is similar to the resin coating layer 3 in the resin-coated metal sheet 1 for containers in that the half-width of a peak assigned to C=O stretching vibration near 1730 cm⁻¹ according to laser Raman spectroscopy is as described hereinabove as measured in such a manner that linearly polarized laser light with a wavelength of 532 nm is incident on the surface (namely, the surface of the outermost layer 30a) in such a manner that the polarization plane is parallel to the rolling direction of the metal sheet. Specifically, the half-width of the peak is 24 cm⁻¹ or more and 28 cm⁻¹ or less.

Furthermore, the resin coating layer 30 is similar to the resin coating layer 3 in the resin-coated metal sheet 1 for containers in that the surface of the resin coating layer 30 (that is, the surface of the outermost layer 30a) has a specific contact angle with diiodomethane after being heat-treated in such a manner that the temperature is increased from room temperature (ambient temperature) to 240°C in 2 minutes. Specifically, the contact angle is 23° or more and 40° or less.

The outermost layer 30a has the same configuration as the resin coating layer 3 described hereinabove. That is, the outermost layer 30a is made of the same resin material as the resin coating layer 3, and contains 0.010 mass% or more and 1.0 mass% or less of an organic lubricant.

Examples of the resin materials for forming the intermediate layer 30b and the lowermost layer 30c are the same as the resin materials for forming the resin coating layer 3 described hereinabove.

In the resin-coated metal sheet 10 for containers, the thicknesses of the outermost layer 30a and of the lowermost layer 30c are each preferably 1.0 µm or more and 5.0 µm or less. The thicknesses of the outermost layer 30a and of the lowermost layer 30c are each more preferably 1.5 µm or more, and even more preferably 2.0 µm or more. The thicknesses of the outermost layer 30a and of the lowermost layer 30c are each more preferably 4.0 µm or less, and even more preferably 3.0 µm or less. The thickness of the intermediate layer 30b is preferably 6.0 µm or more and 30 µm or less. The thickness of the intermediate layer 30b is more preferably 8.0 µm or more, and even more preferably 10 µm or more. The thickness of the intermediate layer 30b is more preferably 25 µm or less, and even more preferably 20 µm or less. When titanium oxide is added to the resin coating layer 30, the amount of titanium oxide contained in the outermost layer 30a is preferably 0 mass% or more and 2.0 mass% or less of the outermost layer 30a in order to avoid the embrittlement of the outermost layer 30a. In order to avoid the decrease in adhesion between the lowermost layer 30c and the metal sheet 2, the amount of titanium oxide contained in the lowermost layer 30c is preferably 0 mass% or more and 2.0 mass% or less of the lowermost layer 30c. In order to ensure whiteness after forming, the amount of titanium oxide contained in the intermediate layer 30b is preferably 10 mass% or more and 30 mass% or less of the intermediate layer 30b.

The resin-coated metal sheet 10 for containers may be produced in the same manner as the resin-coated metal sheet 1 for containers. Specifically, a resin coating layer 30 including an outermost layer 30a, an intermediate layer 30b, and a lowermost layer 30c is formed by a known method beforehand. For example, a single polyester resin or a plurality of dissimilar polyester resins are melted in multiple extruders (single-screw or twin-screw extruders), and molten resin films (30a to 30c) are coextruded from T-dies to form a three-layered stack. The stack is then solidified through cooling rolls and is wound as an unstretched film. Alternatively, the stack is solidified by cooling and is stretched (as, for example, a longitudinally uniaxially stretched film, a transversally uniaxially stretched film, a sequentially biaxially stretched film, or a simultaneously biaxially stretched film). Any of these films may be used as the resin layer. Such a resin coating layer 30 and a resin coating layer 4 are press-bonded to the top and bottom surfaces, respectively, of a metal sheet 2 that has been heated to or above the melting point of the resin coating layers 30, 4, using laminating rolls. The unit is then cooled. In this process, the degree of crystallinity of the surface of the resin coating layer 30 (that is, the surface of the outermost layer 30a) may be controlled in the same manner as the resin-coated metal sheet 1 for containers described hereinabove.

For example, the resin-coated metal sheet for containers of the present embodiment may be preferably manufactured by a method that includes press-bonding a polyester resin coating layer (resin layers constituting a polyester resin coating layer) to a metal sheet, wherein the polyester resin coating layer has a structure having at least three layers including an outermost layer, an intermediate layer, and a lowermost layer; subsequently holding the surface of the outermost layer at a temperature equal to or higher than the melting start temperature of the outermost layer for 0.50 seconds or more; and cooling the surface at a cooling rate of 150°C/sec or more. The outermost layer contains 0.010 mass% or more and 1.0 mass% or less of an organic lubricant. Preferably, the outermost layer and the lowermost layer each contain 0 mass% or more and 2.0 mass% or less of titanium oxide, and the intermediate layer contains 10 mass% or more and 30 mass% or less of titanium oxide. The polyester resin coating layer is preferably made of a resin material containing 90 mol% or more of ethylene terephthalate units. The organic lubricant preferably includes an acid-modified polyolefin or an oxidized polyolefin each having an acid value of 1.0 mgKOH/g or more and 100 mgKOH/g or less.

The resin-coated metal sheet for containers of the present embodiment achieves the same advantageous effects as the resin-coated metal sheet 1 for containers described hereinabove.

### EXAMPLES

0.22 mm thick TFS (tin-free steel, metallic Cr layer: 120 mg/m², Cr oxide layer: 10 mg/m² in terms of metallic Cr, tempering degree: T3CA) was used as metal sheets. Resin coating layers described in Tables 1 to 4 were formed by a film lamination method (by fusion bonding of films). In Examples 1 to 24 and Comparative Examples 1, 6, and 9, resin-coated metal sheets for containers were manufactured by coating both sides of the metal sheet with resin coating layers in the following manner. The metal sheet was heated to a temperature 20 to 40°C higher than the melting point of the resin coating layers, and biaxially stretched films as resin coating layers were thermally press-bonded to the metal sheet using laminating rolls. Subsequently, the surface of the resin coating layer that would define the outer side of a container after can manufacturing (when the layer was a stack, the outermost layer) was held at a temperature equal to or higher than the melting start temperature of the resin coating layer (when the layer was a stack, the outermost layer) for 0.50 to 3.0 seconds, and was subsequently quenched (water-cooled). In Comparative Examples 2 to 5, 7, and 8, resin-coated metal sheets for containers were manufactured by coating both sides of the metal sheet with resin coating layers in the following manner. After films were thermally press-bonded, the surface of the resin coating layer that would define the outer side of a container after can manufacturing (when the layer was a stack, the outermost layer) was held at a temperature equal to or higher than the melting start temperature of the resin coating layer (when the layer was a stack, the outermost layer) for less than 0.50 seconds, and was subsequently quenched (water-cooled).

The resin-coated metal sheets for containers that were obtained were analyzed by the following methods to determine the half-width of a peak assigned to C=O stretching vibration near 1730 cm⁻¹ according to laser Raman spectroscopy, and the contact angle with diiodomethane.

### <Half-width of a peak assigned to C=O stretching vibration near 1730 cm⁻¹ according to laser Raman spectroscopy>

Laser Raman spectroscopy was performed using linearly polarized laser light with respect to the surface of the resin coating layer that would define the outer side of a container when the resin-coated metal sheet for containers was manufactured into a can. In the measurement, the laser light was polarized in a direction parallel to the rolling direction of the metal sheet (the steel sheet). The half-width was measured with respect to a peak assigned to C=O stretching vibration with a Raman shift near 1730 cm⁻¹. A laser Raman spectrometer (RAMAN force manufactured by Nanophoton Corporation) was used for the measurement. The incident light that was used was laser light with a wavelength of 532 nm. The measurement conditions were laser intensity: 6.0 mW, slit width: 50 µm, diffraction grating: 600 gr/mm, and scan count: 1. Spectra were measured with respect to 10 points × 10 points, namely, a total of 100 points at 5 µm pitches. The half-width of a peak assigned to C=O stretching vibration near 1730 cm⁻¹ was determined from the average of the spectra. The pseudo-Voigt function was used for curve fitting in the calculation of the half-width of the peak assigned to C=O stretching vibration near 1730 cm⁻¹.

### <Contact angle with diiodomethane>

The resin-coated metal sheet for containers was heat-treated in a hot air drying oven in such a manner that the temperature was increased from room temperature to 240°C in 2 minutes, and was then cooled to room temperature. Subsequently, the surface of the resin coating layer that would define the outer side of a container after can manufacturing was tested to measure the contact angle with diiodomethane. Using contact angle meter CA-DT manufactured by Kyowa Interface Science Co., Ltd., 2 µL of diiodomethane was dropped onto the surface of the resin coating layer in an environment at 20°C and the static contact angle one second after the droplet landing was calculated using the θ/2 method.

Furthermore, the resin-coated metal sheets for containers that were obtained were tested in the following manners to evaluate the formability (the breakage resistance), the abrasion resistance, and the printing paint adhesion.
(1) Formability
   A paraffin wax was applied to the resin-coated metal sheet for containers. The coated metal sheet was then punched to give a disk having a diameter of 180 mm. The disk was drawn with a cupping press machine and was subsequently subjected to two stages of re-drawing and one stage of ironing. A can with an inner diameter of 52 mm and a can height of 163 mm was thus formed. With respect to the can thus formed, the surface of the resin coating layer on the outer side of the can was visually observed and the formability was evaluated according to the following criteria. The following evaluation determined that formability with rating "o" was acceptable and would ensure no breakage of the resin coating layer during can manufacturing.
   Rating "o": The resin coating layer was free from breakage. No practical problems were present.
   Rating "×": The resin coating layer or the can body was broken. Practical problems were present.
(2) Abrasion resistance
   A paraffin wax was applied to the resin-coated metal sheet for containers. The coated metal sheet was then punched to give a disk having a diameter of 180 mm. The disk was drawn with a cupping press machine and was subsequently subjected to two stages of re-drawing and one stage of ironing. A can with an inner diameter of 52 mm and a can height of 163 mm was thus formed. The can thus formed was heated in such a manner that the temperature was increased from room temperature to 240°C in 2 minutes, and was subsequently forcibly cooled with cold air. With respect to the cooled can, the surface of the resin coating layer on the outer side of the can was visually observed and the abrasion resistance was evaluated according to the following criteria. The following evaluation determined that abrasion resistance with ratings "⊚" and "o" was acceptable and would ensure no or minor abrasion of the resin coating layer during can manufacturing.
   Rating "⊚": No abrasion was found.
   Rating "o": Abrasion was found at a height of 5 mm or less from the can flange. No practical problems were present. Rating "Δ": Abrasion was found at a height of more than 5 mm and 20 mm or less from the can flange. Practical problems were present.
   Rating "×": Abrasion was found at a height of more than 20 mm from the can flange, or the can body was broken. Practical problems were present.
   Rating "-": The resin coating layer or the can body was broken during can manufacturing, and the abrasion resistance could not be evaluated. Practical problems were present.
(3) Printing paint adhesion
   The resin-coated metal sheet for containers was heat-treated with a hot air drying oven in such a manner that the temperature was increased from room temperature to 240°C in 2 minutes, and was then cooled to room temperature. Subsequently, a polyester printing paint was applied to the resin coating layer on the outer side of each sample container. The coated metal sheet was heat-treated with a hot air drying oven in such a manner that the temperature reached 185°C in 90 seconds, and was then cooled to room temperature. The side of the sample printed with the printing paint was scanned from an end of the print with a scratching-type film hardness meter under a load of 500 g at a rate of 10 mm/min. The maximum pencil hardness up to which the printing paint resisted scraping was determined. The printing paint adhesion was evaluated based on the pencil hardness according to the following criteria. The following evaluation determined that ratings "⊚" and "∘" were acceptable and would ensure excellent adhesion of a printing paint after can manufacturing.
   Rating "⊚": 3H or higher pencil hardness.
   Rating "o": 2H pencil hardness. No practical problems were present.
   Rating "Δ": H pencil hardness. Practical problems were present.
   Rating "×": F or lower pencil hardness. Practical problems were present.

Table 5 describes the evaluation results.

**[Table.1]**

| | Resin coating layer on outer side of container | | | | | | | | Resin coating layer on inner side of container | |
|---|---|---|---|---|---|---|---|---|---|---|
| | Composition of resins [mol%] | Thickness [µm] | Titanium oxide content [mass%] | Organic lubricant | | | Half-width of C=O peak [cm⁻¹] | Contact angle with diiodomethane after heat treatment [°] | Composition of resins [mol%] | Thickness [µm] |
| | | | | Type | Content [mass%] | Acid value [mgKOH/g] | | | | |
| Ex. 1 | Ethylene terephthalate 100 | 20 | 16 | Acid-modified polyethylene | 0.5 | 30 | 27 | 28 | Ethylene terephthalate 92 | 19 |
| | | | | | | | | | Ethylene isophthalate 8 | |
| Ex. 2 | Ethylene terephthalate 97 | 20 | 16 | Acid-modified polyethylene | 0.5 | 30 | 26 | 30 | Ethylene terephthalate 92 | 19 |
| | Ethylene isophthalate 3 | | | | | | | | Ethylene isophthalate 8 | |
| Ex. 3 | Ethylene terephthalate 96 | 20 | 0 | Acid-modified polyethylene | 0.5 | 30 | 26 | 28 | Ethylene terephthalate 92 | 19 |
| | Ethylene isophthalate 4 | | | | | | | | Ethylene isophthalate 8 | |
| Ex. 4 | Ethylene terephthalate 96 | 20 | 10 | Acid-modified polyethylene | 0.5 | 10 | 25 | 31 | Ethylene terephthalate 92 | 19 |
| | Ethylene isophthalate 4 | | | | | | | | Ethylene isophthalate 8 | |
| Ex. 5 | Ethylene terephthalate 96 | 20 | 16 | Acid-modified polyethylene | 0.4 | 30 | 27 | 26 | Ethylene terephthalate 92 | 19 |
| | Ethylene isophthalate 4 | | | | | | | | Ethylene isophthalate 8 | |
| Ex. 6 | Ethylene terephthalate 96 | 20 | 16 | Acid-modified polyethylene | 0.5 | 60 | 26 | 28 | Ethylene terephthalate 92 | 19 |
| | Ethylene isophthalate 4 | | | | | | | | Ethylene isophthalate 8 | |
| Ex. 7 | Ethylene terephthalate 96 | 20 | 16 | Acid-modified polyethylene | 0.6 | 30 | 26 | 30 | Ethylene terephthalate 92 | 19 |
| | Ethylene isophthalate 4 | | | | | | | | Ethylene isophthalate 8 | |
| Ex. 8 | Ethylene terephthalate 96 | 20 | 16 | Acid-modified polyethylene | 0.5 | 15 | 25 | 30 | Ethylene terephthalate 92 | 19 |
| | Ethylene isophthalate 4 | | | | | | | | Ethylene isophthalate 8 | |
| Ex. 9 | Ethylene terephthalate 96 | 20 | 16 | Acid-modified polyethylene | 1.0 | 1.0 | 24 | 38 | Ethylene terephthalate 92 | 19 |
| | Ethylene isophthalate 4 | | | | | | | | Ethylene isophthalate 8 | |
| Ex. 10 | Ethylene terephthalate 96 | 20 | 16 | Acid-modified polyethylene | 1.0 | 45 | 25 | 31 | Ethylene terephthalate 92 | 19 |
| | Ethylene isophthalate 4 | | | | | | | | Ethylene isophthalate 8 | |
| Ex. 11 | Ethylene terephthalate 96 | 20 | 16 | Acid-modified polypropylene | 0.4 | 26 | 26 | 23 | Ethylene terephthalate 92 | 19 |
| | Ethylene isophthalate 4 | | | | | | | | Ethylene isophthalate 8 | |
| Ex. 12 | Ethylene terephthalate 96 | 20 | 16 | Acid-modified polypropylene | 0.8 | 26 | 27 | 26 | Ethylene terephthalate 92 | 19 |
| | Ethylene isophthalate 4 | | | | | | | | Ethylene isophthalate 8 | |
| Ex. 13 | Ethylene terephthalate 96 | 20 | 30 | Acid-modified polyethylene | 0.5 | 30 | 26 | 30 | Ethylene terephthalate 92 | 19 |
| | Ethylene isophthalate 4 | | | | | | | | Ethylene isophthalate 8 | |
| Ex. 14 | Ethylene terephthalate 90 | 20 | 16 | Acid-modified polyethylene | 0.4 | 18 | 26 | 31 | Ethylene terephthalate 92 | 19 |
| | Ethylene isophthalate 10 | | | | | | | | Ethylene isophthalate 8 | |
| Ex. 15 | Ethylene terephthalate 96 | 20 | 16 | Oxidized polyethylene | 0.6 | 24 | 24 | 36 | Ethylene terephthalate 92 | 19 |
| | Ethylene isophthalate 4 | | | | | | | | Ethylene isophthalate 8 | |
| Ex. 16 | Ethylene terephthalate 96 | 20 | 16 | Polyethylene | 0.1 | 0 | 27 | 32 | Ethylene terephthalate 92 | 19 |
| | Ethylene isophthalate 4 | | | | | | | | Ethylene isophthalate 8 | |
| Ex. 17 | Ethylene terephthalate 88 | 20 | 16 | Acid-modified polyethylene | 0.4 | 90 | 26 | 26 | Ethylene terephthalate 92 | 19 |
| | Ethylene isophthalate 12 | | | | | | | | Ethylene isophthalate 8 | |
| Ex. 18 | Ethylene terephthalate 96 | 20 | 32 | Acid-modified polyethylene | 0.6 | 30 | 26 | 30 | Ethylene terephthalate 92 | 19 |
| | Ethylene isophthalate 4 | | | | | | | | Ethylene isophthalate 8 | |

**[Table.2]**

| | Resin coating layer on outer side of container | | | | | | | | | | | | | | | | | | | Resin coating layer on inner side of container | |
|---|---|---|---|---|---|---|---|---|---|---|---|---|---|---|---|---|---|---|---|---|---|
| | Outermost layer | | | | | | Intermediate layer | | | | Lowermost layer | | | | | | Half-width of C=O peak [cm⁻¹] | Contact angle with diiodomethane after heat treatment [°] | Thickness [µm] | Composition of resins [mol%] | Thickness [µm] |
| | Composition of resins [mol%] | Thickness [µm] | Titanium oxide content [mass%] | Organic lubricant | | | Composition of resins [mol%] | Thickness [µm] | Titanium oxide content [mass%] | Organic lubricant content [mass%] | Composition of resins [mol%] | Thickness [µm] | Titanium oxide content [mass%] | Organic lubricant | | | | | | | |
| | | | | Type | Content [mass%] | Acid value [mgKOH/g] | | | | | | | | Type | Content [mass%] | Acid value [mgKOH/g] | | | | | |
| Ex. 19 | Ethylene terephthalate 100 | 2.0 | 0 | Acid-modified polyethylene | 0.5 | 18 | Ethylene terephthalate 100 | 16 | 20 | 0 | Ethylene terephthalate 100 | 2.0 | 0 | Acid-modified polyethylene | 0.5 | 18 | 27 | 30 | 20 | Ethylene terephthalate 92 | 19 |
| | | | | | | | | | | | | | | | | | | | | Ethylene isophthalate 8 | |
| Ex. 20 | Ethylene terephthalate 96 | 2.0 | 0 | Acid-modified polyethylene | 0.5 | 30 | Ethylene terephthalate 96 | 16 | 20 | 0 | Ethylene terephthalate 96 | 2.0 | 0 | Acid-modified polyethylene | 0.5 | 30 | 26 | 29 | 20 | Ethylene terephthalate 92 | 19 |
| | Ethylene isophthalate 4 | | | | | | Ethylene isophthalate 4 | | | | Ethylene isophthalate 4 | | | | | | | | | Ethylene isophthalate 8 | |
| Ex. 21 | Ethylene terephthalate 96 | 2.0 | 0 | Acid-modified polyethylene | 0.4 | 60 | Ethylene terephthalate 96 | 16 | 20 | 0 | Ethylene terephthalate 96 | 2.0 | 0 | Acid-modified polyethylene | 0.4 | 60 | 25 | 29 | 20 | Ethylene terephthalate 92 | 19 |
| | Ethylene isophthalate 4 | | | | | | Ethylene isophthalate 4 | | | | Ethylene isophthalate 4 | | | | | | | | | Ethylene isophthalate 8 | |
| Ex. 22 | Ethylene terephthalate 96 | 5.0 | 0 | Acid-modified polyethylene | 0.8 | 30 | Ethylene terephthalate 96 | 20 | 20 | 0 | Ethylene terephthalate 96 | 5.0 | 0 | Acid-modified polyethylene | 0.8 | 30 | 24 | 32 | 30 | Ethylene terephthalate 92 | 19 |
| | Ethylene isophthalate 4 | | | | | | Ethylene isophthalate 4 | | | | Ethylene isophthalate 4 | | | | | | | | | Ethylene isophthalate 8 | |
| Ex. 23 | Ethylene terephthalate 96 | 2.0 | 0 | Acid-modified polypropylene | 0.6 | 26 | Ethylene terephthalate 96 | 16 | 20 | 0 | Ethylene terephthalate 96 | 2.0 | 0 | Acid-modified polypropylene | 0.6 | 26 | 27 | 26 | 20 | Ethylene terephthalate 92 | 19 |
| | Ethylene isophthalate 4 | | | | | | Ethylene isophthalate 4 | | | | Ethylene isophthalate 4 | | | | | | | | | Ethylene isophthalate 8 | |
| Ex. 24 | Ethylene terephthalate 96 | 2.0 | 2.0 | Acid-modified polyethylene | 0.5 | 30 | Ethylene terephthalate 96 | 16 | 19 | 0 | Ethylene terephthalate 96 | 2.0 | 2.0 | Acid-modified polyethylene | 0.5 | 30 | 26 | 28 | 20 | Ethylene terephthalate 92 | 19 |
| | Ethylene isophthalate 4 | | | | | | Ethylene isophthalate 4 | | | | Ethylene isophthalate 4 | | | | | | | | | Ethylene isophthalate 8 | |

**[Table. 3]**

| | Resin coating layer on outer side of container | | | | | | | | Resin coating layer on inner side of container | |
|---|---|---|---|---|---|---|---|---|---|---|
| | Composition of resins [mol%] | Thickness [µm] | Titanium oxide content [mass%] | Organic lubricant | | | Half-width of C=O peak [cm⁻¹] | Contact angle with diiodomethane after heat treatment [°] | Composition of resins [mol%] | Thickness [µm] |
| | | | | Type | Content [mass%] | Acid value [mgKOH/g] | | | | |
| Comp. Ex. 1 | Ethylene terephthalate 96 | 20 | 16 | - | 0 | - | 26 | 22 | Ethylene terephthalate 92 | 19 |
| | Ethylene isophthalate 4 | | | | | | | | Ethylene isophthalate 8 | |
| Comp. Ex. 2 | Ethylene terephthalate 96 | 20 | 16 | Acid-modified polyethylene | 1.0 | 15 | 19 | 43 | Ethylene terephthalate 92 | 19 |
| | Ethylene isophthalate 4 | | | | | | | | Ethylene isophthalate 8 | |
| Comp. Ex. 3 | Ethylene terephthalate 96 | 20 | 16 | Acid-modified polyethylene | 0.8 | 20 | 21 | 41 | Ethylene terephthalate 92 | 19 |
| | Ethylene isophthalate 4 | | | | | | | | Ethylene isophthalate 8 | |
| Comp. Ex. 4 | Ethylene terephthalate 96 | 20 | 16 | Acid-modified polyethylene | 0.9 | 50 | 20 | 42 | Ethylene terephthalate 92 | 19 |
| | Ethylene isophthalate 4 | | | | | | | | Ethylene isophthalate 8 | |
| Comp. Ex. 5 | Ethylene terephthalate 96 | 20 | 16 | Polyethylene | 1.5 | 0 | 21 | 45 | Ethylene terephthalate 92 | 19 |
| | Ethylene isophthalate 4 | | | | | | | | Ethylene isophthalate 8 | |

**[Table.4]**

| | Resin coating layer on outer side of container | | | | | | | | | | | | | | | | | | | Resin coating layer on inner side of container | |
|---|---|---|---|---|---|---|---|---|---|---|---|---|---|---|---|---|---|---|---|---|---|
| | Outermost layer | | | | | | Intermediate layer | | | | Lowermost layer | | | | | | Half-width of C=O peak [cm⁻¹] | Contact angle with diiodomethane after heat treatment [°] | Thickness [µm] | Composition of resins [mol%] | Thickness [µm] |
| | Composition of resins [mol%] | Thickness [µm] | Titanium oxide content [mass%] | Organic lubricant | | | Composition of resins [mol%] | Thickness [µm] | Titanium oxide content [mass%] | Organic lubricant content [mass%] | Composition of resins [mol%] | Thickness [µm] | Titanium oxide content [mass%] | Organic lubricant | | | | | | | |
| | | | | Type | Content [mass%] | Acid value [mgKOH/g] | | | | | | | | Type | Content [mass%] | Acid value [mgKOH/g] | | | | | |
| Comp. Ex. 6 | Ethylene terephthalate 96 | 2.0 | 0 | - | 0 | - | Ethylene terephthalate 96 | 16 | 20 | 0 | Ethylene terephthalate 96 | 2.0 | 0 | - | 0 | - | 25 | 21 | 20 | Ethylene terephthalate 92 | 19 |
| | Ethylene isophthalate 4 | | | | | | Ethylene isophthalate 4 | | | | Ethylene isophthalate 4 | | | | | | | | | Ethylene isophthalate 8 | |
| Comp. Ex. 7 | Ethylene terephthalate 96 | 2.0 | 0 | Acid-modified polyethylene | 0.9 | 30 | Ethylene terephthalate 96 | 16 | 20 | 0 | Ethylene terephthalate 96 | 2.0 | 0 | Acid-modified polyethylene | 0.9 | 20 | 21 | 42 | 20 | Ethylene terephthalate 92 | 19 |
| | Ethylene isophthalate 4 | | | | | | Ethylene isophthalate 4 | | | | Ethylene isophthalate 4 | | | | | | | | | Ethylene isophthalate 8 | |
| Comp. Ex. 8 | Ethylene terephthalate 96 | 2.0 | 0 | Acid-modified polyethylene | 0.7 | 15 | Ethylene terephthalate 96 | 16 | 20 | 0 | Ethylene terephthalate 96 | 2.0 | 0 | Acid-modified polyethylene | 0.7 | 15 | 21 | 41 | 20 | Ethylene terephthalate 92 | 19 |
| | Ethylene isophthalate 4 | | | | | | Ethylene isophthalate 4 | | | | Ethylene isophthalate 4 | | | | | | | | | Ethylene isophthalate 8 | |
| Comp. Ex. 9 | Ethylene terephthalate 96 | 2.0 | 0 | Polyethylene | 1.4 | 0 | Ethylene terephthalate 96 | 16 | 20 | 0 | Ethylene terephthalate 96 | 2.0 | 0 | Polyethylene | 1.4 | 0 | 24 | 43 | 20 | Ethylene terephthalate 92 | 19 |
| | Ethylene isophthalate 4 | | | | | | Ethylene isophthalate 4 | | | | Ethylene isophthalate 4 | | | | | | | | | Ethylene isophthalate 8 | |

**[Table.5]**

| | Formability | Abrasion resistance | Printing paint adhesion |
|---|---|---|---|
| Ex. 1 | ○ | ⊚ | ⊚ |
| Ex. 2 | ○ | ⊚ | ⊚ |
| Ex. 3 | ○ | ⊚ | ⊚ |
| Ex. 4 | ○ | ⊚ | ⊚ |
| Ex. 5 | ○ | ⊚ | ⊚ |
| Ex. 6 | ○ | ⊚ | ⊚ |
| Ex. 7 | ○ | ⊚ | ⊚ |
| Ex. 8 | ○ | ⊚ | ⊚ |
| Ex. 9 | ○ | ⊚ | ○ |
| Ex. 10 | ○ | ⊚ | ⊚ |
| Ex. 11 | ○ | ○ | ⊚ |
| Ex. 12 | ○ | ○ | ⊚ |
| Ex. 13 | ○ | ⊚ | ⊚ |
| Ex. 14 | ○ | ⊚ | ⊚ |
| Ex. 15 | ○ | ⊚ | ⊚ |
| Ex. 16 | ○ | ⊚ | ⊚ |
| Ex. 17 | ○ | ○ | ⊚ |
| Ex. 18 | ○ | ○ | ⊚ |
| Ex. 19 | ○ | ⊚ | ⊚ |
| Ex. 20 | ○ | ⊚ | ⊚ |
| Ex. 21 | ○ | ⊚ | ⊚ |
| Ex. 22 | ○ | ⊚ | ○ |
| Ex. 23 | ○ | ○ | ⊚ |
| Ex. 24 | ○ | ⊚ | ⊚ |
| Comp. Ex. 1 | ○ | x | ⊚ |
| Comp. Ex. 2 | × | - | × |
| Comp. Ex. 3 | × | - | Δ |
| Comp. Ex. 4 | × | - | Δ |
| Comp. Ex. 5 | × | - | × |
| Comp. Ex. 6 | ○ | × | ⊚ |
| Comp. Ex. 7 | × | - | × |
| Comp. Ex. 8 | × | - | Δ |
| Comp. Ex. 9 | ○ | Δ | × |

As described in Table 5, Examples achieved good results in all of formability (breakage resistance), abrasion resistance, and printing paint adhesion. The resin-coated metal sheets for containers that were obtained were capable of undergoing can manufacturing without breakage of the resin coating layer and with no or minor abrasion of the resin coating layer and also exceled in printing paint adhesion after the can manufacturing. In contrast, Comparative Examples had unsatisfactory evaluation results in at least any one of formability, abrasion resistance, and printing paint adhesion.

### Reference Signs List

1, 10 RESIN-COATED METAL SHEET FOR CONTAINERS
2 METAL SHEET
3, 30 (POLYESTER) RESIN COATING LAYER
4 RESIN COATING LAYER
30a OUTERMOST LAYER
30b INTERMEDIATE LAYER
30c LOWERMOST LAYER

## Claims

1. A resin-coated metal sheet for containers comprising a polyester resin coating layer on at least one side of a metal sheet, wherein
the polyester resin coating layer is such that:
the half-width of a peak assigned to C=O stretching vibration near 1730 cm⁻¹ according to laser Raman spectroscopy is 24 cm⁻¹ or more and 28 cm⁻¹ or less as measured in such a manner that linearly polarized laser light with a wavelength of 532 nm is incident on the surface of the polyester resin coating layer in such a manner that the polarization plane is parallel to a rolling direction of the metal sheet,
the polyester resin coating layer contains 0.010 mass% or more and 1.0 mass% or less of an organic lubricant, and
the surface of the polyester resin coating layer, after being heat-treated in such a manner that the temperature is increased from room temperature to 240°C in 2 minutes, has a contact angle with diiodomethane of 23° or more and 40° or less.

2. The resin-coated metal sheet for containers according to claim 1, wherein the polyester resin coating layer contains 30 mass% or less of titanium oxide.

3. A resin-coated metal sheet for containers comprising a polyester resin coating layer on at least one side of a metal sheet, wherein
the polyester resin coating layer is such that:
the polyester resin coating layer has a structure having at least three layers including an outermost layer, an intermediate layer, and a lowermost layer,
the half-width of a peak assigned to C=O stretching vibration near 1730 cm⁻¹ according to laser Raman spectroscopy is 24 cm⁻¹ or more and 28 cm⁻¹ or less as measured in such a manner that linearly polarized laser light with a wavelength of 532 nm is incident on the surface of the outermost layer in such a manner that the polarization plane is parallel to a rolling direction of the metal sheet,
the surface of the outermost layer, after being heat-treated in such a manner that the temperature is increased from room temperature to 240°C in 2 minutes, has a contact angle with diiodomethane of 23° or more and 40° or less,
the outermost layer contains 0.010 mass% or more and 1.0 mass% or less of an organic lubricant,
the outermost layer and the lowermost layer each contain 0 mass% or more and 2.0 mass% or less of titanium oxide, and the intermediate layer contains 10 mass% or more and 30 mass% or less of titanium oxide, and
the outermost layer and the lowermost layer each have a thickness of 1.0 µm or more and 5.0 µm or less, and the intermediate layer has a thickness of 6.0 µm or more and 30 µm or less.

4. The resin-coated metal sheet for containers according to any one of claims 1 to 3, wherein the polyester resin coating layer is made of a resin material containing 90 mol% or more of ethylene terephthalate units.

5. The resin-coated metal sheet for containers according to any one of claims 1 to 4, wherein the organic lubricant comprises an acid-modified polyolefin or an oxidized polyolefin each having an acid value of 1.0 mgKOH/g or more and 100 mgKOH/g or less.

6. A method for manufacturing a resin-coated metal sheet for containers described in claim 1 or 2, the method comprising:
press-bonding a polyester resin coating layer containing 0.010 mass% or more and 1.0 mass% or less of an organic lubricant to a metal sheet, and subsequently holding the surface of the polyester resin coating layer at a temperature equal to or higher than a melting start temperature of the polyester resin coating layer for 0.50 seconds or more, and cooling the surface at a cooling rate of 150°C/sec or more.

7. The method for manufacturing a resin-coated metal sheet for containers according to claim 6, wherein the polyester resin coating layer contains 30 mass% or less of titanium oxide.

8. A method for manufacturing a resin-coated metal sheet for containers described in claim 3, the method comprising: press-bonding a polyester resin coating layer to a metal sheet, wherein the polyester resin coating layer has a structure having at least three layers including an outermost layer, an intermediate layer, and a lowermost layer; the outermost layer contains 0.010 mass% or more and 1.0 mass% or less of an organic lubricant; the outermost layer and the lowermost layer each contain 0 mass% or more and 2.0 mass% or less of titanium oxide; and the intermediate layer contains 10 mass% or more and 30 mass% or less of titanium oxide, and subsequently
holding the surface of the outermost layer at a temperature equal to or higher than a melting start temperature of the outermost layer for 0.50 seconds or more, and cooling the surface at a cooling rate of 150°C/sec or more.

9. The method for manufacturing a resin-coated metal sheet for containers according to any one of claims 6 to 8, wherein the polyester resin coating layer is made of a resin material containing 90 mol% or more of ethylene terephthalate units.

10. The method for manufacturing a resin-coated metal sheet for containers according to any one of claims 6 to 9, wherein the organic lubricant comprises an acid-modified polyolefin or an oxidized polyolefin each having an acid value of 1.0 mgKOH/g or more and 100 mgKOH/g or less.
